(19) Europäisches Patentamt
European Patent Office
Office européen des brevets

(11) Veröffentlichungsnummer : **0 167 174**
**B1**

(12) # EUROPÄISCHE PATENTSCHRIFT

(45) Veröffentlichungstag der Patentschrift : **02.11.89**

(21) Anmeldenummer : **85108374.1**

(22) Anmeldetag : **05.07.85**

(51) Int. Cl.⁴ : **C 08 K 5/04**, C 08 L 27/06 // (C08K5/04, 5:15, 5:13, 5:09)

(54) **Stabilisatorgemische für Vinylchloridpolymermassen.**

(30) Priorität : **06.07.84 CH 3282/84**

(43) Veröffentlichungstag der Anmeldung : **08.01.86 Patentblatt 86/02**

(45) Bekanntmachung des Hinweises auf die Patenterteilung : **02.11.89 Patentblatt 89/44**

(84) Benannte Vertragsstaaten : **AT BE CH DE FR GB IT LI LU NL SE**

(56) Entgegenhaltungen : **GB-A- 948 506**

(73) Patentinhaber : **LONZA AG**
**Gampel/Wallis (CH)**

(72) Erfinder : **Völker, Theodor, Dr.**
**Kleestrasse 7**
**Reinach (Kanton Baselland) (CH)**

(74) Vertreter : **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8**
**D-8000 München 40 (DE)**

**EP 0 167 174 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft neue Stabilisatorgemische für Vinylchloridpolymermassen, die eine deutliche Verbesserung der anfänglichen Klarheit und der Wärmebeständigkeit ergeben, bestehend aus 3,5-substituierten Tetrahydropyranverbindungen als neue Co-Stabilisatorkomponenten sowie einem oder mehreren Metallsalzen von organischen Säuren und/oder Metallphenolaten, vorzüglicherweise in Kombination mit weiteren Co-Stabilisatoren.

Es ist bekannt, dass die Verarbeitungsprozesse für Polymere relativ hohe Temperaturen benötigen. Bei diesen Temperaturen, die bis 200 °C erreichen können, werden die Vinylchloridpolymerisate merklich abgebaut, was sich stark in der Veränderung ihrer Farbe sowie in der Aenderung ihrer mechanischen Eigenschaften äussert.

Um diesen nachteiligen Abbau zu verhindern, wurden die Polymerisate mit Stabilisatoren versetzt, wie z. B. mit stickstofffreien Ketoverbindungen, die allein oder zusammen mit Metallsalzen von organischen Carbonsäuren eingesetzt werden (DE-PS 15 69 407), sowie 3,5-substituierte Tetrahydropyrane zusammen mit Metallsalzen von organischen Carbonsäuren (GB-A-948 506).

Aus diesen Ketoverbindungen hat sich vor allem die Dehydracetsäure (DHS) in der Praxis bewährt. Diese konnte aber hinsichtlich ihrer Löslichkeit für flüssige Stabilisatorsysteme und ihrer starken Neigung zu Plate-Out nicht befriedigen. Es wurden auch bereits Diketoverbindungen, wie das in der Praxis gebräuchliche Stearoylbenzoylmethan oder 1-Phenyl-5-methylhexandion, angewendet (DE-AS 26 00 516 und DE-AS 27 28 862). Aber auch diese konnten bezüglich der Wärmebeständigkeit und im Falle des Steaorylbenzoylmethans zusätzlich hinsichtlich des Anwendungsgebietes, beschränkt auf Ca/Zn-Stabilisatoren, nicht vollauf genügen.

Es hat sich nun gezeigt, dass man diese Nachteile durch Zusatz eines neuen PVC-Co-Stabilisators, der bisher auf dem Gebiet der Kunststoffe noch nicht eingesetzt worden ist, umgehen kann. Erfindungsgemäss wird dies durch Co-Stabilisatorgemische gemäss Patentanspruch 1 erreicht.

Diese neuen Co-Stabilisatoren werden zweckmässig in Mengen von 0,01 bis 2,5 %, vorzugsweise in Mengen von 0,05 bis 0,15 %, bezogen auf das Polymerisatgewicht, verwendet.

Die Mengen an Metallsalzen von organischen Carbonsäuren und/oder Phenolaten liegen zweckmässig bei 0,05 bis 10 %, vorteilhaft bei 1 bis 8 %, bezogen auf das Polymer.

Als Polymer kommen Homopolymere des Vinylchlorids und Copolymere des Vinylchlorids mit Vinyläther, Vinylester und Acrylester in Betracht.

Die erfindungsgemässen Co-Stabilisatoren können in der Keto- und/oder Enolform vorliegen und können einfach, wie in der DE-OS 25 50 647 beschrieben, hergestellt werden. Sofern hier lediglich die Ketoform der Tetrahydropyranverbindungen genannt ist, umfaßt diese selbstverständlich auch die tautomere Enolform oder zumindest liegt ein Gleichgewicht mit dieser vor. Es kommen Verbindungen zum Einsatz, in welchen R Alkylreste mit 1 bis 6 C-Atomen, geradkettig oder verzweigt, bedeuten. Vorzugsweise kommt das 3,5-Diacetyltetrahydropyran-2, 4,6-Trion bzw. die entsprechende tautomere Verbindung zum Einsatz.

Als Metallsalze von organischen Carbonsäuren werden solche verstanden, die aus einem ein- oder zweiwertigen Metall und einem aliphatischen oder aromatischen Carbonsäurerest gebildet sind.

Zweckmäßig gelangen Alkali- und Erdalkalimetalle, wie Li, Na, K, Ca, Ba, sowie Metalle wie Ag, Zn, Pb, Cd, Sn, Sb zur Anwendung.

Als aliphatische Carbonsäurereste finden solche mit Kettenlängen von zweckmäßig 5 bis 30 Kohlenstoffatomen, wie beispielsweise die Ethylhexanoate, Octoate, Stearate, Oleate, Laurate, Palmitate, Myristate, Ricinoleate oder Gemische aus $C_9$-$C_{10}$-Säuren Anwendung. Als zweckmäßige aromatische Carbonsäurereste finden die Benzoate, die Phenolate oder auch die Phthalate Anwendung.

Besonders vorteilhafte Metallsalze, die getrennt oder zweckmässig als Gemisch von zwei Salzen eingesetzt werden, sind Ca/Zn, Ca/Mg/Zn, Ba/Zn.

Es ist vorteilhaft, dem Gemisch als weitere Co-Stabilisatoren Phosphite (z. B. Diphenylisodecylphosphit), epoxydierte Leinsamen- oder Sojaöle oder Alkylepoxystearate oder -oleate zuzusetzen.

Die erfindungsgemässen Stabilisatorzusammensetzungen können nebst mit PVC auch mit weiteren Zusätzen, wie Weichmacher, Gleitmittel, Pigmente, Füllstoffe, Antioxidantien, Lichtstabilisatoren oder anderen Hilfmitteln, in die Polymerisate eingearbeitet werden.

Die Herstellung der erfindungsgemässen Polymermassen erfolgt auf an sich bekannte Weise :

Die verschiedenen Stabilisatoren können entweder einzeln oder in Form eines Vorgemisches mit dem Weichmacher vermischt werden. In diese Mischung wird dann das Polymerisat eingearbeitet. Alle gebräuchlichen Arbeitsweisen auf diesem Gebiet eignen sich zur Herstellung des Gemisches der verschiedenen Komponenten. Vorteilhafterweise wird die Homogenisierung der Masse in einem Mischer vorgenommen, und dabei kann zur besseren Homogenisation bei erhöhter Temperatur gearbeitet werden. Diese Temperatur kann beispielsweise etwa 100 °C betragen. Je nach Typ des verwendeten PVC (Emulsions-/Suspensions-Masse) und dem Weichmachergehalt entsteht dabei ein Dry Blend oder eine fliessfähige Paste.

Die Mischungen lassen sich mit Hilfe aller für die Verarbeitung von PVC-Mischungen gebräuchlichen Arbeitsweisen, wie Extrudieren, Blasspritzen, Kalandrieren, Spritzgiessen, Rotations- oder Schleudergiessen, oder Streichen auf einem gegebenenfalls nichthaftenden Trägermaterial, weiterverarbeiten.

Die Erfindung wird in den folgenden Beispielen erläutert.

Beispiel 1

Zum Plate-Out-Test wurde eine Mischung A aus
100,00 Teilen Suspensions-PVC K-Wert 70
30,00 Teilen Dioctylphthalat als Weichmacher
1,50 Teilen Ca/Zn-stearat-, -decanat-Stabilisator, zusätzlich Phosphite als Co-Stabilisator enthaltend
0,08 Teilen 3,5-Diacetyltetrahydropyran-2,4,6-trion als Co-Stabilisator

hergestellt.

Als Vergleich wurde eine entsprechende Mischung B, in der 3,5-Diacetyltetrahydropyran-2,4,6-trion als Co-Stabilisator durch 0,08 Teile Dehydracetsäure ersetzt wurde, hergestellt. Durchführung des Plate-Out-Testes :

Den zu prüfenden Mischungen A und B wurde ein Zusatz von 0,1 Teil eines für den Plate-Out-Test üblichen Rotpigmentes auf 100 Teile Mischung zugesetzt. Nach einer Walzzeit von 7 Minuten bei 165 °C auf dem Mischwalzwerk wurden die entstandenen Folien abgezogen und verworfen. Das auf den Walzen befindliche Plate-Out wurde mittels einer sog. Reinigungsmischung aus weiss pigmentiertem PVC aufgenommen. die Walzzeit betrug 3 Minuten. Der Grad der Rotfärbung dieser Reinigungsfolie war das Mass für die Intensität der Plate-Out-Bildung. Der Grad der Rotfärbung (+ a-Wert) wurde mit einem Hunterlab- Colorimeter gemessen [R. S. Hunter, J. Opt. Soc. Am. 48, 985 ff (1958), R. S. Hunter, Official Digest. Fed. of Paint and Varnish Prod. Clubs Philadelphia 35, 350 ff (1963) Nr. 459].

Resultate :

| Co-Stabilisator | | Rot-färbung | opt. Eindruck |
|---|---|---|---|
| A) 3,5-Diacetyltetrahydropyran-2,4,6-trion | Erfindung | + 1,82 | weiss |
| B) Dehydracetsäure | Vergleich | + 10,96 | rosa |

Beispiel 2

Zum Walztest wurde eine Hart-PVC-Mischung C aus
100,00 Teilen Suspensions-PVC K-Wert 70
10,00 Teilen Dioctylphthalat
1,50 Teilen Ba/Zn-oleat-, -decanat-Stabilisator als Co-Stabilisator Phosphite enthaltend
0,08 Teilen 3,5-Diacetyltetrahydropyran-2,4,6-trion als Co-Stabilisator

hergestellt.

Als Vergleich wurde anstatt mit 3,5-Diacetyltetrahydropyran2,4,6-trion eine entsprechende Mischung D mit 0,08 Teilen Steaorylbenzoylmethan und eine Mischung E mit 0,08 Teilen 1-Phenyl5-methylhexandion hergestellt.

Diese Hart-PVC-Mischungen wurden bei 180 °C dem Dauer-Walztest unterzogen.

Die Verfärbung der Muster wurde mit einem Hunterlab-Colorimeter in gewissen Zeitabständen gemessen.

Aus den erhaltenen Messwerten, dem Rotwert (+a), Gelbwert (+b) und dem Weisswert (+L) konnten die im folgenden angegebenen Yellowness Indices berechnet werden.

Resultate :

| Co-Stabilisatoren | | Yellowness Indices | | | | | |
|---|---|---|---|---|---|---|---|
| C) 3,5-Diacetyltetrahydropyran-2,4,6-trion | Erfindung | 3,7 | 6,3 | 7,5 | 8,9 | 7,8 | 8,7 |
| D) Steaorylbenzoylmethan | Vergleich | 7,2 | 8,8 | 9,6 | 12,6 | 11,6 | 14,8 |
| E) 1-Phenyl-5-methylhexandion | Vergleich | 8,0 | 10,6 | | 11,9 | 14,3 | 14,6 |
| Walzzeit bei 180°C in Minuten | | 1 | 10 | 15 | 20 | 25 | 30 |

Diese Versuche sind in Graphik 1 dargestellt.

Beispiel 3

Es wurde nach folgender Rezeptur eine Mischung F hergestellt, die sich besonders zur Herstellung von Flaschen nach dem Blasverfahren eignet :

100,00 Teile Suspensions-PVC K-Wert 70
8,00 Teile Copolymerisat aus Butadien, Styrol und Methylmethacrylat als Mittel zur Verbesserung der Schlagfestigkeit
0,80 Teile Wachse als Schmier- oder Gleitmittel
1,00 Teile weitere übliche Verarbeitungshilfsmittel
4,00 Teile epoxydiertes Sojaöl
0,40 Teile Ca-stearat
0,13 Teile Zn-stearat
0,10 Teile 3,5-Diacetyltetrahydropyran-2,4,6-trion als CoStabilisator.

Als Vergleichsrezeptur wurde anstatt mit 3,5-Diacetyltetrahydropyran-2,4,6-trion als Co-Stabilisator eine entsprechende Mischung H mit Dehydracetsäure und eine entsprechenden Mischung G mit Steaorylbenzoylmethan hergestellt.

Diese Flaschenrezepturen wurden entsprechend Beispiel 2 dem Walztest bei 180 °C unterzogen.

Die Verfärbungen der Proben wurden ebenfalls entsprechend Beispiel 2 nach gewissen Zeitabständen mit einem Hunterlab-Colorimeter aufgenommen.

Aus den Werten konnten folgende Yellowness Indices bestimmt werden.

Resultate :

| Co-Stabilisatoren | | Yellowness Indices | | |
|---|---|---|---|---|
| F) 3,5-Diacetyltetrahydropyran-2,4,6-trion | Erfindung | 10 | 56 | 82 |
| G) Steaorylbenzoylmethan | Vergleich | 18 | 108 | 137 |
| H) Dehydracetsäure | Vergleich | 10 | 67 | 96 |
| I) ohne Additiv | Vergleich | 32 | 124 | 155 |
| Walzzeit bei 180°C in Minuten | | 2 | 10 | 15 |

Diese Versuche sind in Graphik 2 dargestellt.

Beispiel 4

Es wurden Flaschenrezepturen mit gleicher Zusammensetzung wie in Beispiel 3 hergestellt, nur dass anstatt mit 0,1 Teil 3,5Diacetyltetrahydropyran-2,4,6-trion
eine Mischung K mit 0,1 Teil 3,5-Bis (valeryl)-4,6-dihydroxy-2H-pyran-2-on,
eine Vergleichsmischung L mit 0,1 Teil 3,5-Bis(nonanoyl)-4,6-dihydroxy-2H-pyran-2-on,
eine Vergleichsmischung M mit 0,1 Teil Steaorylbenzoylmethan
und
eine Vergleichsmischung N ohne Additiv
hergestellt wurde.

Diese Flaschenrezepturen wurden entsprechend Beispiel 2 dem Walztest bei 180 °C unterzogen.

Wiederum entsprechend Beispiel 2 wurden die Verfärbungen nach gewissen Zeitabständen mit einem Hunterlab-Colorimeter aufgenommen. Es ergaben sich folgende Yellowness Indices :

(Siehe Tabelle Seite 5 f.)

Resultate :

| Co-Stabilisatoren | | Yellowness Indices | | |
|---|---|---|---|---|
| K) 3,5-Bis(valeryl)-4,6-dihydroxy-2H-pyran-2-on | Erfindung | 14 | 25 | 37 |
| L) 3,5-Bis(nonanoyl)-4,6-dihydroxy-2H-pyran-2-on | Vergleich | 28 | 62 | 75 |
| M) Steaorylbenzoylmethan | Vergleich | 14 | 25 | 39 |
| N) ohne Additiv | Vergleich | 31 | 94 | 114 |
| Walzzeit bei 180°C in Minuten | | 2 | 10 | 15 |

## Patentansprüche

1. Stabilisatorgemische für Vinylchloridpolymerisate zur Verbesserung der anfänglichen Klarheit und der Wärmebeständigkeit, bestehend aus zumindest einer der Stickstoff freien 3,5-substituierten Tetrahydropyran-Verbindungen der Formeln

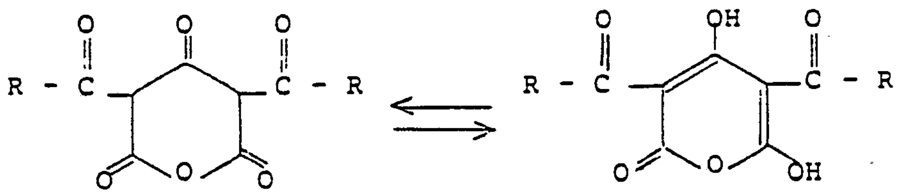

in welcher R Alkylreste mit 1 bis 6 C-Atomen, geradkettig oder verzweigt, darstellen, und einem Metallsalz einer organischen Säure und/oder einem Metallphenolat.

2. Stabilisatorgemische nach Anspruch 1, in denen ein Alkali- bzw. Erdalkalisalz als Metallsalz, einer organischen Säure eingesetzt wird.

3. Stabilisatorgemische nach Ansprüchen 1 und 2, bestehend zusätzlich aus einem zweiten Salz eines mehrwertigen Metalls und einer organischen Säure.

4. Stabilisatorgemische nach Ansprüchen 1 bis 3, bestehend zusätzlich aus einem organischen Phosphit, einem Phenol und/oder einem Epoxyester mit 22 bis 150 C-Atomen.

5. Stabilisatorgemische nach Ansprüchen 1 bis 4, in denen die stickstofffreien 3,5-substituierten Tetrahydropyran-Verbindungen in Mengen von 0,01 bis 2,50 %, bezogen auf das Polymerisat, zugesetzt werden.

6. Stabilisatorgemische nach Ansprüchen 1 bis 5, in denen die stickstofffreien 3,5-substituierten Tetrahydropyran-verbindungen in Mengen von 0,05 bis 0,15 %, bezogen auf das Polymerisat, zugesetzt werden.

7. Vinylchloridpolymerisatmasse, enthaltend ein Stabilisatorgemisch gemäß den Ansprüchen 1 bis 4.

## Claims

1. Stabilizer mixtures for vinyl chloride polymers for improving the initial clarity and the heat stability, consisting of at least one of the nitrogen-free 3,5-substituted tetrahydropyran compounds of the formulae

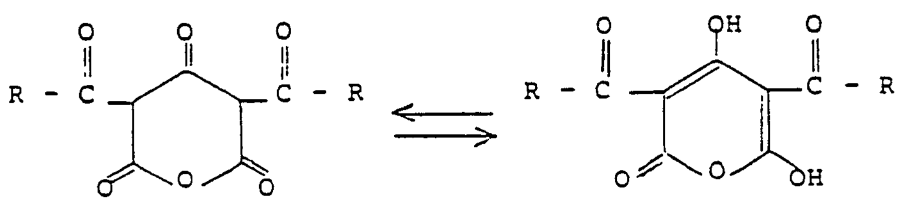

in which R represents alkyl radicals having 1 to 6 carbon atoms, straight-chained or branched, and a metal salt of an organic acid and/or a metal phenolate.

2. Stabilizer mixtures according to claim 1, in which an alkali and alkaline earth resp. metal salt is used as metal salt of an organic acid.

3. Stabilizer mixtures according to claims 1 and 2, consisting additionally of a second salt of a polyvalent metal and an organic acid.

4. Stabilizer mixtures according to claims 1 to 3, consisting additionally of an organic phosphite, a phenol and/or an epoxy ester with 22 to 150 carbon atoms.

5. Stabilizer mixtures according to claims 1 to 4, in which the nitrogen-free 3,5-substituted tetrahydropyran compounds are added in amounts of 01.01 to 2.50 %, based on the polymer.

6. Stabilizer mixtures according to claims 1 to 5, in which the nitrogen-free 3,5-substituted tetrahydropyran compounds are added in amounts of 0.05 to 0.15 %, based on the polymer.

7. Vinyl chloride polymer composition, containing a stabilizer mixture according to claims 1 to 4.

## Revendications

1. Mélanges de stabilisants pour des polymères de chlorure de vinyle pour améliorer la transparence de départ et la résistance à la température, constitués d'au moins l'un des composés du tétrahydropyranne 3,5-substitués, ne contenant pas d'azote, de formules

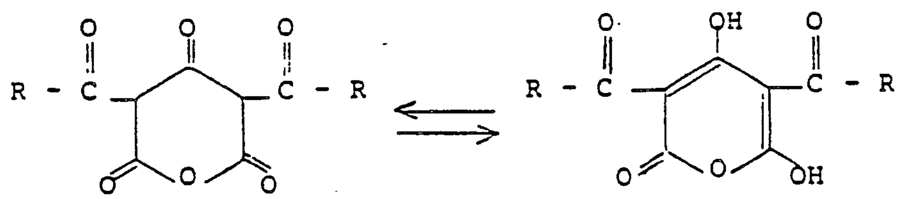

dans lesquelles R représente des radicaux alcoyle avec 1 à 6 atomes de C, rectilignes ou ramifiés, et d'un sel métallique d'un acide organique et/ou d'un phénolate de métal.

2. Mélanges de stabilisants selon la revendication 1, dans lesquels un sel alcalin ou alcalino-terreux d'un acide organique est mis en oeuvre en tant que sel métallique.

3. Mélanges de stabilisants selon les revendications 1 et 2, constitués en outre d'un deuxième sel d'un métal polyvalent et d'un acide organique.

4. Mélanges de stabilisants selon les revendications 1 à 3, constitués en outre d'un phosphite organique, d'un phénol et/ou d'un époxyester avec 22 à 150 atomes de C.

5. Mélanges de stabilisants selon les revendications 1 à 4, dans lesquels les composés de type tétrahydropyranne 3,5-substitués, ne contenant pas d'azote, sont ajoutés en des quantités de 0,01 à 2,50 % par rapport au polymère.

6. Mélanges de stabilisants selon les revendications 1 à 5, dans lesquels les composés de type tétrahydropyranne 3,5-substitués, ne contenant pas d'azote, sont ajoutés en des quantités de 0,05 à 0,15 % par rapport au polymère.

7. Masse de polymère de chlorure de vinyle ou résine de chlorure de polyvinyle contenant un mélange de stabilisants selon les revendications 1 à 4.

Graphik 1

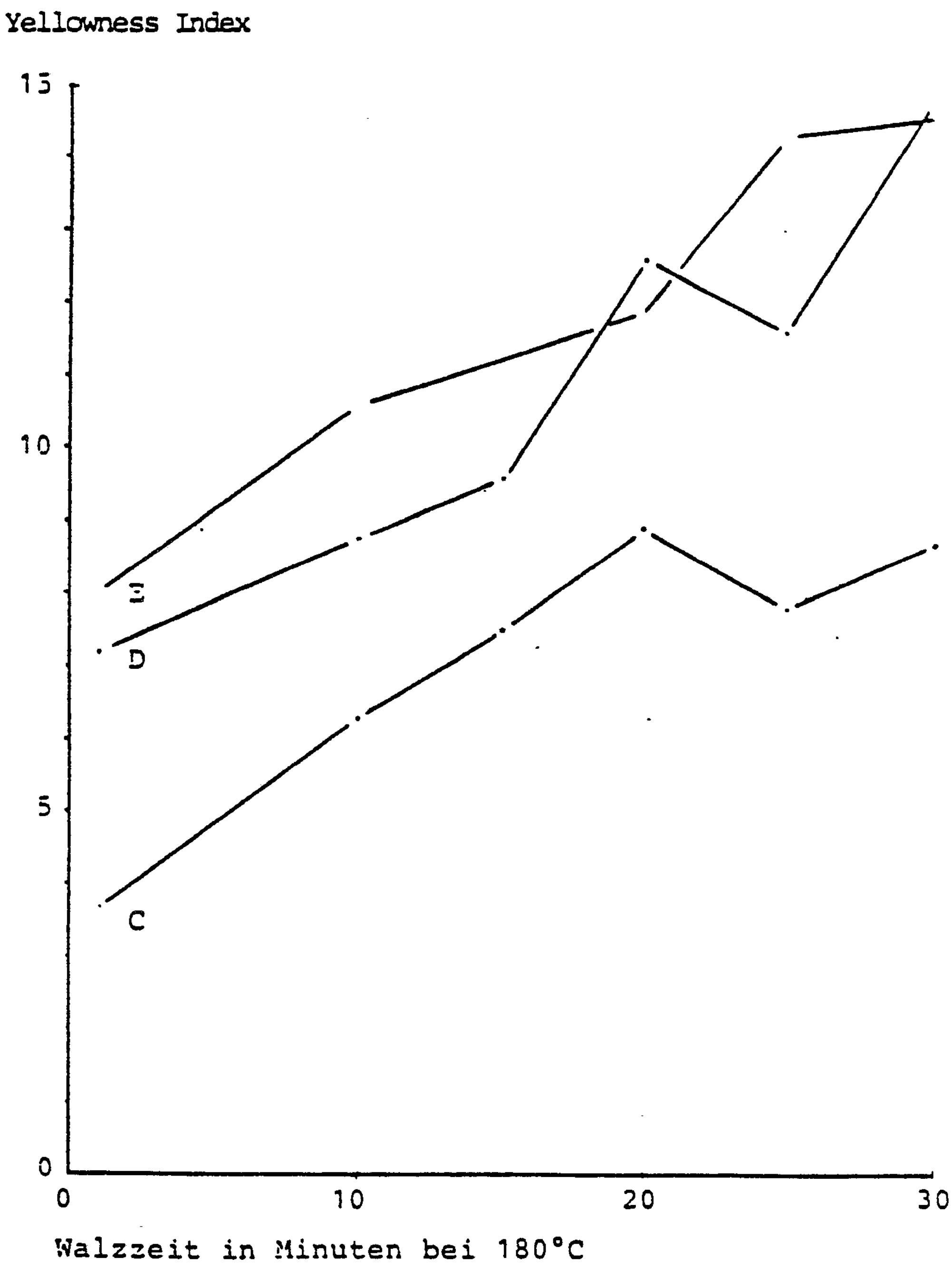
Yellowness Index
15
10
5
0
E
D
C
0
10
20
30
Walzzeit in Minuten bei 180°C

Graphik 2

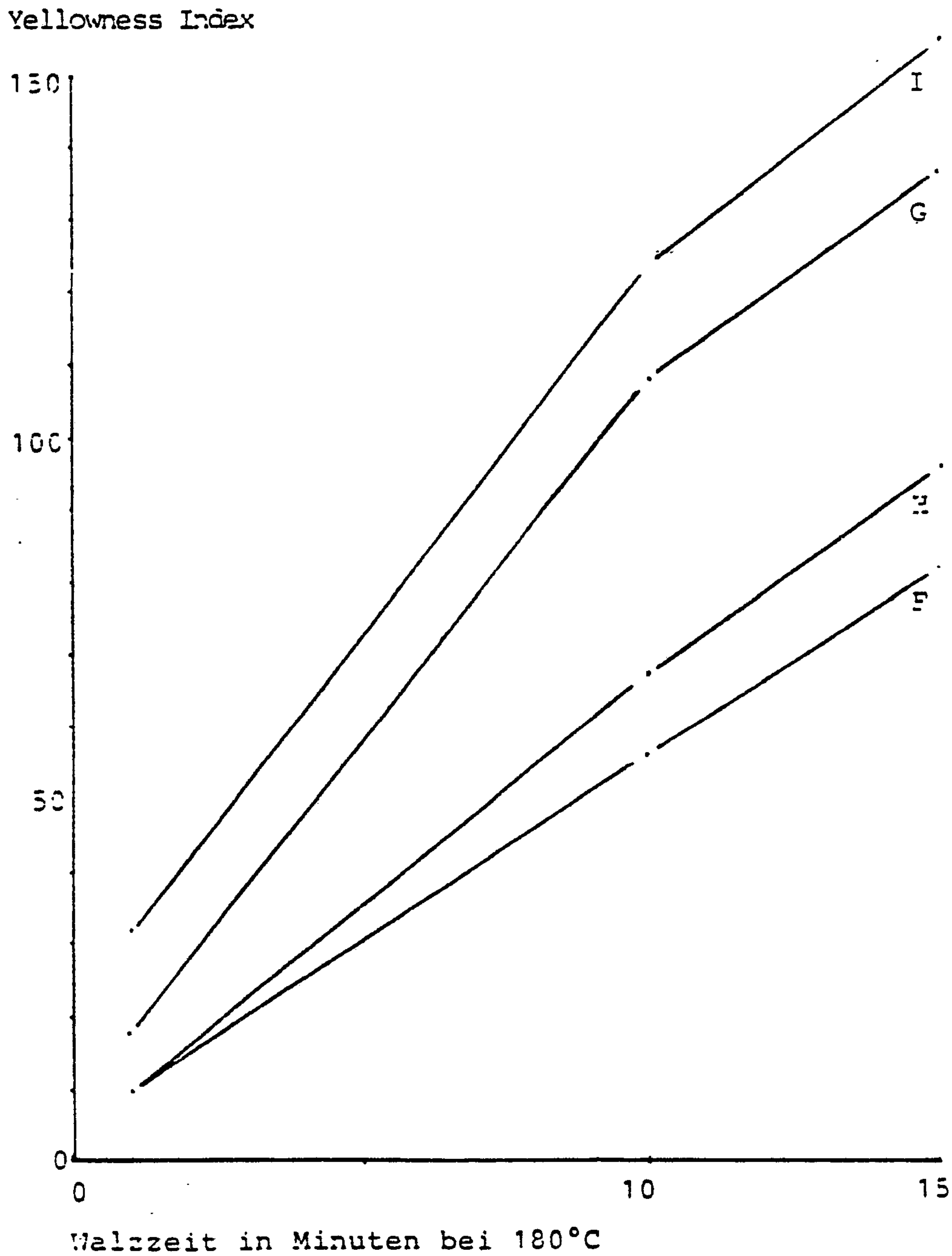

Yellowness Index
150
100
50
0
I
G
H
F
0
10
15
Walzzeit in Minuten bei 180°C